Europäisches Patentamt

European Patent Office

Office européen des brevets

(11) Publication number: **0 227 380**
**A1**

# EUROPEAN PATENT APPLICATION

(21) Application number: 86309623.6

(22) Date of filing: 10.12.86

(51) Int. Cl.⁴: **G11B 7/013** , G11B 7/00 , G11B 7/08 , G11B 20/20

(30) Priority: 11.12.85 JP 276696/85
13.12.85 JP 279333/85
13.12.85 JP 279335/85
13.12.85 JP 279336/85

(43) Date of publication of application:
01.07.87 Bulletin 87/27

(84) Designated Contracting States:
DE FR GB

(71) Applicant: **CANON KABUSHIKI KAISHA**
**30-2, 3-chome, Shimomaruko**
**Ohta-ku Tokyo(JP)**

(72) Inventor: **Hasegawa, Koyo**
**7-9 Nishi Ikebukuro 3-chome Toshima-ku**
**Tokyo(JP)**
Inventor: **Endo, Kiyonobu**
**2-41, Ohoka 4-chome Minami-ku**
**Yokohama-shi Kanagawa-ken(JP)**

(74) Representative: **Beresford, Keith Denis Lewis**
**et al**
**BERESFORD & Co. 2-5 Warwick Court High**
**Holborn**
**London WC1R 5DJ(GB)**

(54) Information recording medium and process for reproducing information therefrom.

(57) An information recording card has plural information tracks (3) approximately perpendicular to the direction of information arrangement in each track, and reading head alignment patterns (202) recorded along the extention of the direction of plural information tracks. An information regenerating process from the information recording card has a step of positioning a reading head by relative movement of the head and the alignment pattern, and a step of moving the reading head relative to the plural information tracks, wherein the relative speed in the former step is lower than that in the latter.

FIG. 4

## Information Recording Medium and Process for Reproducing Information Therefrom

### BACKGROUND OF THE INVENTION

#### Field of the Invention

The present invention relates to an information recording medium and a process for regenerating or reproducing information from said medium, and more particularly to an information recording medium with an improved recording format for enabling high-speed access, and a process for example for optical regeneration of information from said medium.

#### Related Background Art

In recent years, optical information recording media such as optical files or compact disks are utilized for the regeneration of information. More recently, attention is being given to the regeneration of information utilizing an optical information recording medium of card shape, hereinafter called optical card, of superior portability and of a relatively large memory capacity.

Fig. I is a schematic plan view of an example of recording format on an optical card.

On an optical card I, there is defined a recording area 2 including plural bands 3, each composed of a plurality of information tracks 4. Each track has a memory capacity of several ten to hundred bits. Each band is defined by reference lines 5. An arrow A indicates the moving direction of the optical card I at the information regeneration, and an arrow C indicates the scanning direction for information reading by an optical head at said regeneration.

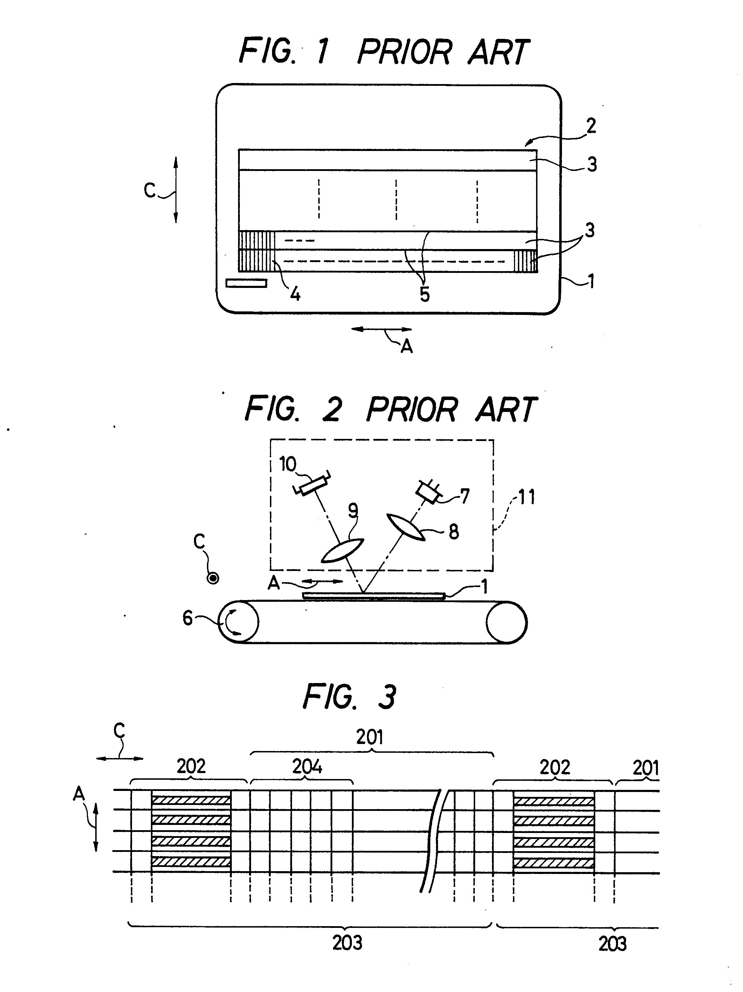

Fig. 2 is a schematic view of an apparatus for regenerating information from an optical card of the above-explained recording format.

The optical card I can be reciprocated in the direction A by a rotating mechanism 6, and the information recorded on said card is read, track by track, with an optical head II. Light from a light source 7 such as a light-emitting diode is focused by a lens system 8 and illuminates the optical card I. The image of a track of said optical card I is focused, by an image optical system 9, on a linear sensor array I0. The image of the information track on said sensor array I0 varies according to the movement of the card I in the direction A. The sensor array I0 scans each information track several times while it is focused on the array I0. In this manner the information recorded on a certain number of information tracks in a band is regenerated, and, upon its completion, the optical head II suitably moves in a direction C to focus the information tracks of another desired band on the sensor array, thereby regenerating the recorded information in the same manner.

Fig. 3 is a schematic enlarged view of a part of the recording format of the optical card I shown in Fig. I, as described in the U.S. Patent Application (the same assignee as the present application) wherein a hatched area indicates a signal "I" and a blank area indicates a signal "0".

Fig. 3 illustrates an end, in the direction A, of the recording area of the optical card I. 20I indicates an information track area, in which a line of information bits in the direction C constitutes an information track. 202 indicates a reference line, and a band 203 is composed of said reference line and the information track area 20I. A unit data area 204 in the information track consists of 5 bits, and the information track is composed of a group of such unit data areas. The reference line 202 has a length of 6 bits in the direction C, of which 2 bits at both ends have signals "0", while the central 4 bits have a signal "I" of a striped shape narrower than a bit in the direction A. Each stripe is positioned corresponding to each information track.

The information reading operation of each information track by the sensor array I0 is initiated upon detecting the information "0IIII0" of the reference line 202, indicating a correct alignment with the information track. When the optical card I moves in the direction A relative to the optical head II, said reference line information "0IIII0" vanishes and there appears information "000000". When information "0IIII0" is obtained again, the alignment with a next track is identified and the reading operation is started as explained above. In this manner the reference line 202 not only separates and identifies the tracks neighboring in the direction C, but also performs same functions for the tracks neighboring in the direction A.

In order to regenerate information over plural bands from an optical card of the above-explained recording format, the optical head II is moved in the direction C for reading the information tracks of each band. In such case it is necessary to control the position of the optical head II in such a manner that the image of an information track falls, over the entire area of the desired band 203, in the effective reading range of the sensor array I0. Said control is achieved by positioning the reference line 202 of the desired band in a predetermined area of the sensor array I0.

On the other hand, the information regeneration from such optical card should be as rapid as possible, and, for this purpose, the moving speed of the optical card I in the direction A should be made higher.

However, it is difficult to increase the moving speed of the optical head II when it is moved between different bands under control in the direction C. Consequently, if the moving of the optical card I in the direction A is increased alone, the optical card I may move in the direction A while the optical head II is controlled in the direction C for bringing the reference line to a desired position on the sensor array I0, so that certain tracks, particularly those close to the first track, may pass through the reading area of the sensor array I0 and may not be properly reproduced. Such failed reading of information tracks requires a renewed access to said tracks, so that it has been difficult to reduce the time required for information regeneration.

## SUMMARY OF THE INVENTION

In consideration of the foregoing, an object of the present invention is to provide an information recording medium with a recording format enabling accurate and high-speed access to a desired information track or a band.

Another object of the present invention is to provide a process for regenerating information, from the information recording medium of the above-mentioned recording format, allowing accurate high speed access to a desired information track or band.

The above-mentioned first object can be achieved, according to the present invention, by an information recording medium provided with plural information tracks arranged in a direction substantially perpendicular to the direction of array of information in each track, and regenerating head alignment patterns recorded along extentions of the direction of arrangement of said plural information tracks.

Also the above-mentioned second object can be achieved, according to the present invention, by an information regenerating process comprising a step of positioning a regenerating head through a relative movement thereof and the head alignment patterns recorded along the extentions of the direction of arrangement of said plural information tracks, and a step of information regeneration by a relative movement of said regenerating head along the direction of arrangement of said plural information tracks, wherein the relative speed of the regenerating head in the direction of arrangement of plural information tracks in said positioning step does not exceed the relative speed in said information regenerating step.

Said plural information tracks are recorded on said recording medium, and the information is regenerated with an information regenerating head provided with a one-or two-dimentional sensor array.

The recording method of the information in said information tracks or the heat alignment patterns varies according to the regenerating method, but can be realized in the form of bit patterns utilizing difference in the direction of magnetization, difference in reflectivity or surface pit patterns.

On the other hand, the recorded information can be regenerated optically, magnetically or otherwise, according to the above-mentioned recording method, and the regenerated information is converted into electrical signals and supplied to a display unit, a printing unit, an information memory unit or a control unit.

The above-mentioned recording medium is preferably formed as a card in consideration of portability, but it may naturally formed otherwise, for example as a disk. Thus the form of the medium is not a limitation to the present invention.

Still other features of the present invention will become fully apparent from the following description of the preferred embodiments.

## BRIEF DESCRIPTION OF THE DRAWINGS

Fig. I is a schematic plan view of a recording format of an optical card;

Fig. 2 is a schematic view of an apparatus for regenerating information from an information recording medium;

Fig. 3 is a schematic view of a recording format of an information recording medium;

Fig. 4 is a schematic view of a recording format of an information recording medium;

Fig. 5 is a schematic view of 4/5 NRZI modulating process;

Fig. 6 is a schematic view showing the correlation between the information track and the sensor array;

Fig. 7 is a schematic view showing the correlation between the sensor array and record bits of an information recording medium;

Fig. 8 is a schematic view showing the process of information regeneration from the information recording medium;

Fig. 9 is a block diagram of an information regenerating apparatus;

Fig. I0 is a block diagram of a reference line detecting circuit thereof;

Fig. II is a schematic view showing the change in the image area on the sensor array at the information regeneration from the recording medium and a resulting change in the output of the sensor array;

Fig. I2 is a schematic view of another embodiment of recording format of the information recording medium of the present invention;

Figs. I3A and I3B are schematic views showing still other embodiments of recording format;

Fig. I4A is a schematic view showing the change in the image area of the sensor array at the information regeneration and a resulting change in the output of the sensor array; and

Fig. I4B is a schematic view of the trajectory of an optical head.

## DETAILED DESCRIPTION OF THE PREFERRED EMBODIMENTS

Now the present invention will be clarified in greater detail by embodiments thereof shown in the attached drawings.

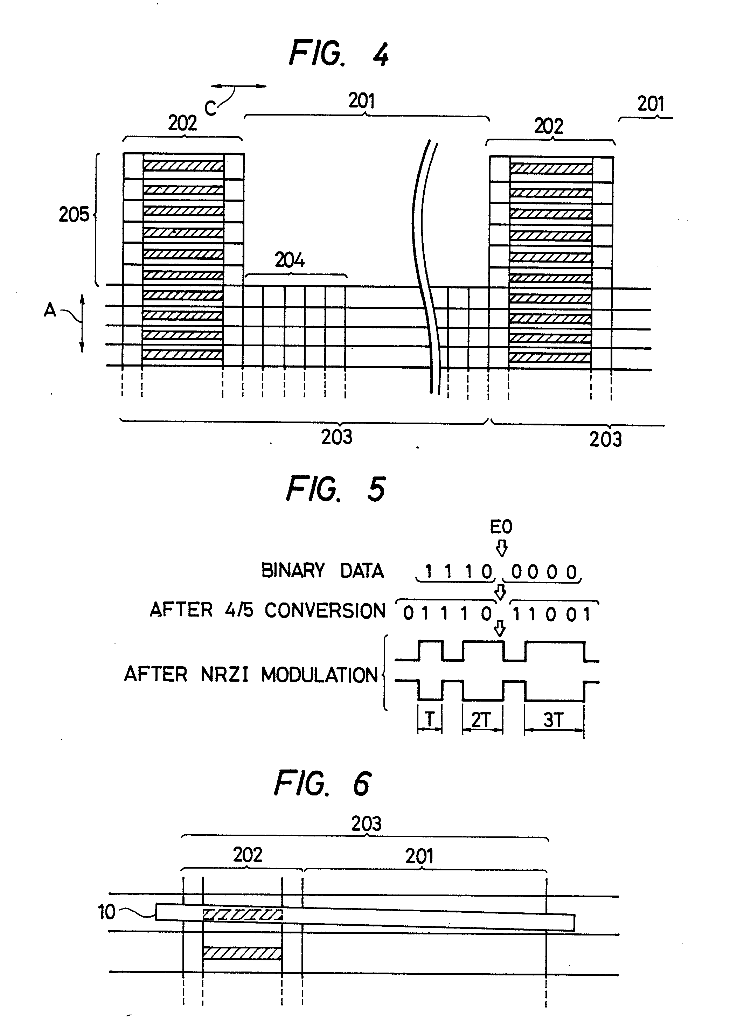

Fig. 4 is a partial enlarged schematic view of an embodiment of the recording format employed in the information recording medium of the present invention, corresponding to a part shown in Fig. 3.

20I indicates an information track area, in which a line of information bits in the direction C constitutes an information track. A unit data area 204 of the information track consists of 5 bits, and each information track is composed of a group of such unit data areas. A separating area or reference line 202 in the present embodiment is formed adjacent, in the direction C (second direction in the present invention), to the information track area 20I as shown in Fig. 3, and is externally extended as a portion 205 in the direction A. Said extended portion 205 constitutes a regenerating head alignment pattern serving for the head positioning. A band 203 consists of said reference line 202 and the information track area 20I.

Each unit data area 204 of the information track consists of 5 bits, and the data recorded therein are subjected to a 4/5 conversion of the following rule, followed by a NRZI modulation.

## 4/5 Conversion Table

| Data | Code | |
| --- | --- | --- |
| | MSB | LSB |
| 0000 | | 11001 |
| 0001 | | 11011 |
| 0010 | | 10010 |
| 0011 | | 10011 |
| 0100 | | 11101 |
| 0101 | | 10101 |
| 0110 | | 10110 |
| 0111 | | 10111 |
| 1000 | | 11010 |
| 1001 | | 01001 |
| 1010 | | 01010 |
| 1011 | | 01011 |
| 1100 | | 11110 |
| 1101 | | 01101 |
| 1110 | | 01110 |
| 1111 | | 01111 |

Fig. 5 schematically shows the 4/5 NRZI modulation employed in the present embodiment. Hexadecimal data Eø are subjected to a 4/5-conversion and then to a NRZI modulation, and the resulting signals only have lengths of T, 2T and 3T, wherein T is the minimum inversion interval of the signal, corresponding to I bit in Fig. 4. Thus the information recorded in the information track area 20I do not contain an inversion interval of 4T or longer.

Therefore, in the present embodiment, an area of an inversion interval of 4T is utilized as the separating area, or reference line 202, for separating and identifying the information tracks. In the same manner as shown in Fig. 3, the reference line 202 has a length of 6 bits in the direction C, of which two end bits are "I" while central 4 bits are "I" of a strip shape with a narrower width (for example about I/2) than a bit length in the direction A. In this manner an area of separating signal

"0IIII0" with an inversion interval of 4T is formed in the direction C. Naturally the separating signal is not limited to such form but can be of any form identifiable upon signal reading.

The information track has a capacity of 80 bits consisting of 16 unit data areas, but is not provided with a preamble area for self-clocking at the regeneration.

As explained above, the detection of the reference line can be securely achieved since the separating area 202 contains consecutive same signals which do not appear in the information track. Also the storage of a larger amount of information is rendered possible due to the absence of the preamble area for obtaining information regenerating clock signals and also due to the reduced number of bits other than data.

Also in the present embodiment, wherein the central 4 bits "I" of the reference line 202 have a width narrower than a bit length in the direction A, the entire sensor array 10 securely faces a same information track as long as the separating signal "0IIII0" of the reference line 202 can be perfectly read on said sensor array 10, even if the information track is not parallel to the reading area of the sensor array 10 as shown in Fig. 6.

In the present embodiment, the portion 205 externally extended from the reference line 202 adjacent to the information track area 201 functions as an optical head introduction area for controlling the position of the optical head 11 in the direction C.

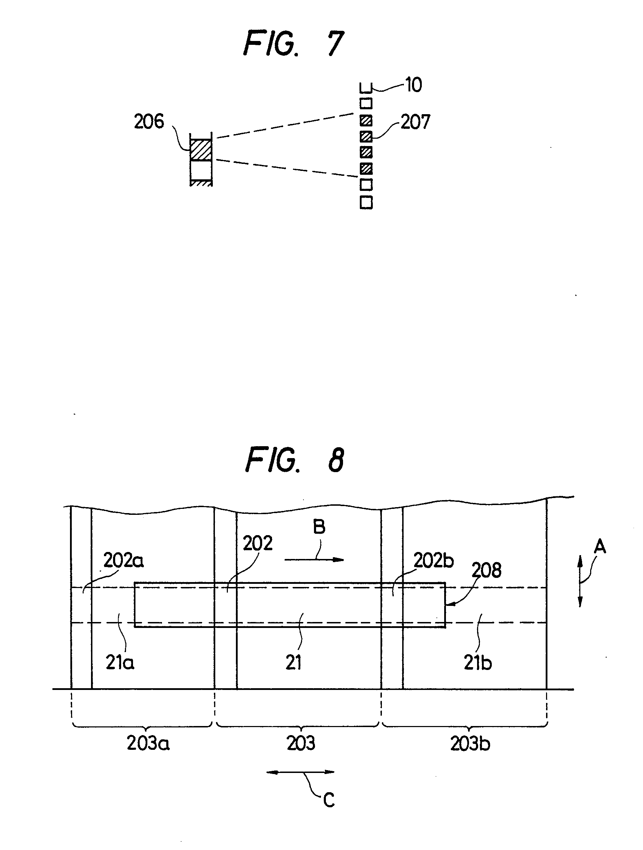

In the following there will be explained an embodiment of the process for regenerating the information from the above-explained information recording medium. Said embodiment employs an optical card as the information recording medium having the recording format shown in Fig. 4, and an apparatus shown in Fig. 2 for regenerating information from said optical card. Also there is employed an optical magnification that, as shown in Fig. 7, a bit 206 in the recording area of the optical card corresponds to four cells 207 of the one-dimensional sensor array 10. As an example, in case each bit 206 of the optical card has a dimension of 10 μm and a cell 207 of the sensor array 10 has a dimension of 15 μm, the magnification of the imaging optical system 9 should be 4 x 15/10 = 6 times.

Fig. 8 schematically shows the process of information regeneration from the recording medium according to the present invention.

The recording area of the optical card is provided with a band 203, neighboring bands 203a, 203b, information tracks 21, 21a, 21b of said bands, and separating areas 202, 202a, 202b for separating said information tracks, in the format shown in Fig. 4. Each track of a band is composed of a separating area of 6 bits and an information track of 80 bits, or a total of 86 bits, and is therefore projected onto 344 cells of the sensor array 10.

There is employed a one-dimensional sensor array 10 having 512 cells 207, and a reading area 208 is defined thereon in such a manner that parts of neighboring information tracks 21a, 21b are also focused on said sensor array.

The definition of the reading area 208 in such manner allows to obtain a clock signal at the regeneration of information, without a preamble area in the track 21 for obtaining self clock signal. More specifically, when the sensor array 10 performs a reading operation in the direction B in the reading area 208, regenerating clock pulses are obtained from the information of a part of the track 21a, and the information recorded in the track 21 is regenerated by thus obtained clock signal from the point of detection of the separating area 202, and the regeneration is terminated upon detection of the separating area 202b.

Also the relative position of the reading area 208 and the information track 21 can be known from the signal of the separating area 202 obtained from the sensor array 10.

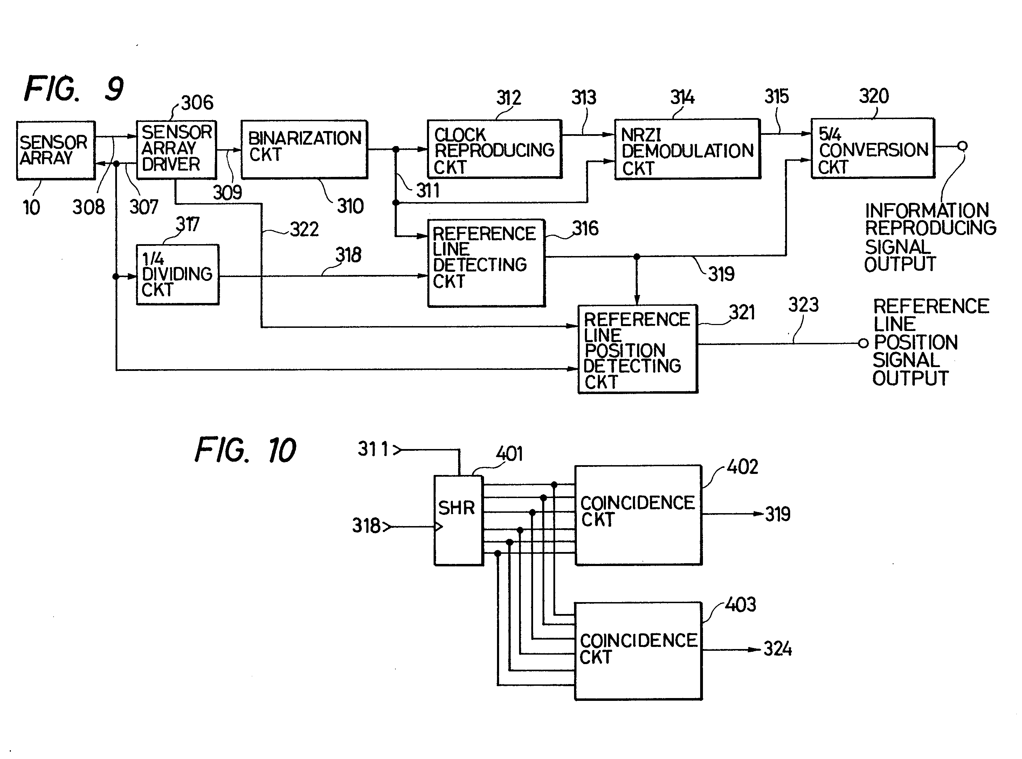

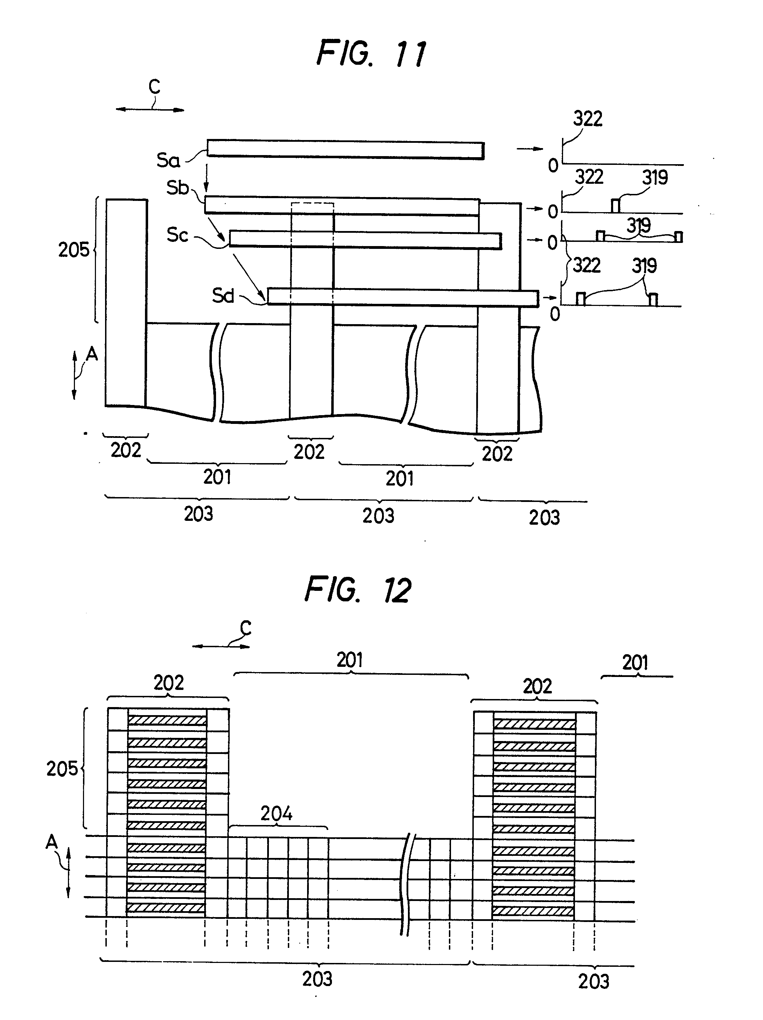

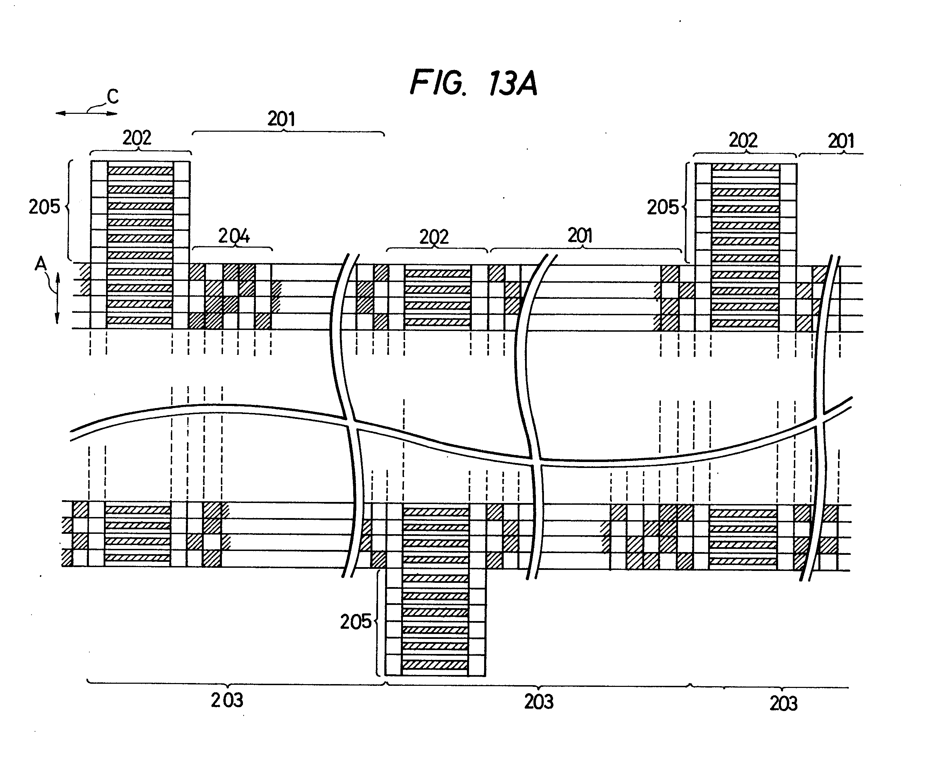

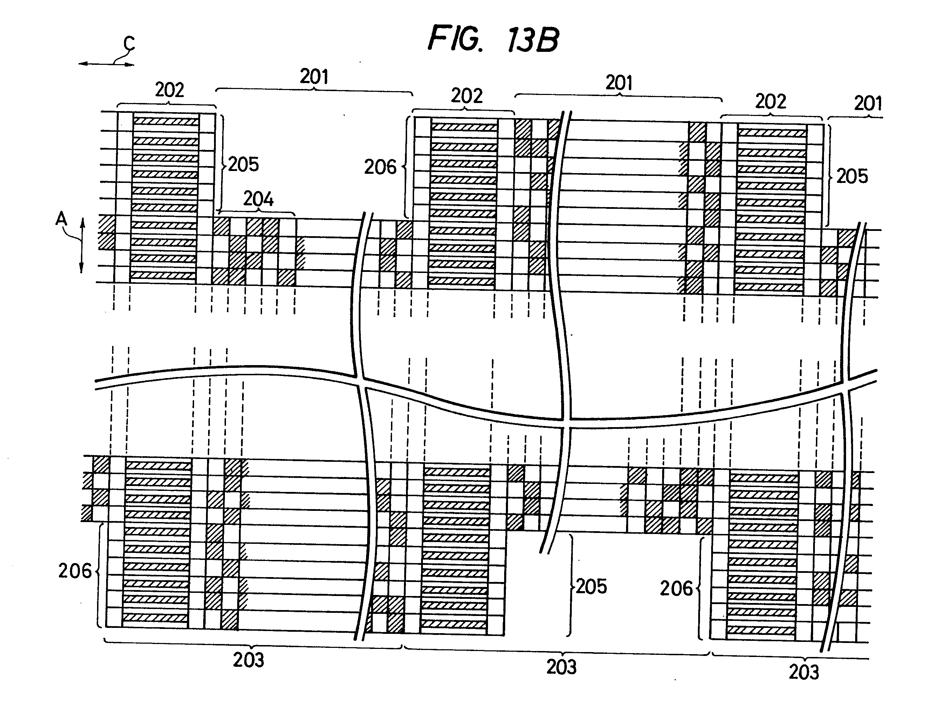

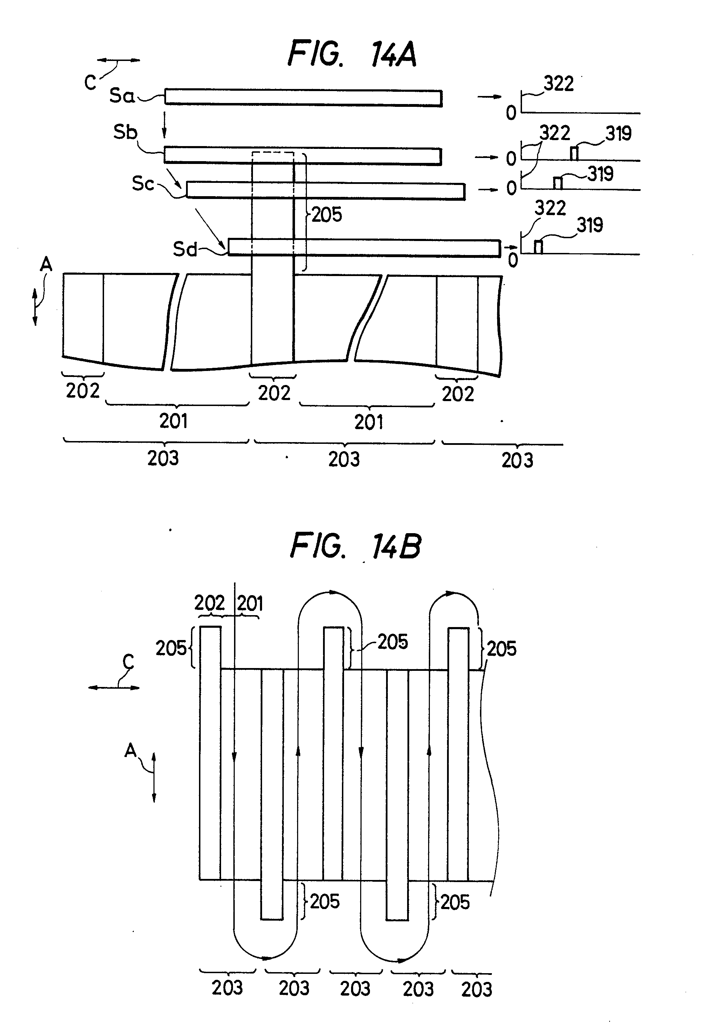

Fig. 9 is a block diagram of an embodiment of the apparatus for regenerating information from the optical card according to the present invention.

Referring to Fig. 9, the sensor array 10 having the reading area 208 is given by a driving clock signal 307 from a sensor array driver 306, and the output signal 308 of the sensor array is amplified by said driver 306, and supplied, as a video signal 309, to a binalizing circuit 310. A NRZI signal 311 obtained therefrom is supplied to a clock reproducing circuit 312, a NRZI demodulating circuit 314 and a reference line detecting circuit 316.

The clock reproducing circuit 312 extracts a clock signal 313 from the NRZI signal 311 and supplies said clock signal to the NRZI demodulating circuit 314, which receives the clock signal 313 and the NRZI signal 311 and supplies a demodulated NRZ signal 315 to a 5/4 conversion circuit 320. The reference line detecting circuit 316 receives a clock signal 318 obtained by frequency division of the driving clock signal 307 in a 1/4 frequency dividing circuit 317 and the NRZI signal 311 from the binarizing circuit 310, and supplies a reference line detection signal 319 to the 5/4 conversion circuit 320, which effects 5/4 conversion on the NRZ signal 315 in response to said detection signal 319.

A reference line position detecting circuit 321 releases a reference line position signal 323 by counting the number of driving clock pulses 307 from the entry of a reading start signal 322 from the sensor array driver 306 to the entry of the reference line detection signal 319. As will be ex-

plained later, said reference line position signal 323 is used for positioning the one-dimensional sensor array with respect to the array of information tracks.

Fig. I0 is a block diagram of said reference line detecting circuit 3I6. A serial input terminal of a shift register 40I receives the NRZI signal 3II, while a clock input terminal thereof receives the I/4-divided clock signal 3I8. Also the parallel output terminals of 6 bits of the shift register 40I are respectively connected to the input terminals of a "0IIII0" coincidence circuit 402, of which coincidence signal is supplied, as the reference line detection signal 3I9, to the 5/4 conversion circuit 320. Said parallel output terminals are respectively connected to the input terminals of a "000000" coincidence circuit 403 releasing a coincidence signal 324.

Now there will be explained the function of the above-explained regenerating apparatus, while making reference to Figs. 4 and 8.

At first, when the sensor array I0 scans the reading area in the direction B in response to the driving clock signal 307, a signal representing a part of the information of the track 2Ia appears in the NRZI signal 3II. Since said signal contains inversion intervals of T, 2T and 3T only as explained before, the clock signal 3I3 can be reproduced by detecting the minimum inversion interval T with the clock reproducing circuit 3I2, composed for example of a PLL circuit. Said clock signal 3I3 is uttilized for demodulating the NRZI signal 3II into the NRZ signal 3I5 in the demodulating circuit 3I4. However the 5/4 conversion circuit 320 does not function until the entry of the first reference line detection signal 3I9. The shift register 40I of the reference line detecting circuit 3I6 receives bit signals of the reading area 208 in succession and is always filled with signals of 6 bits. Consequently the reference line detection signal 3I9 is not released unless the content of said shift register 40I coincides with the content "0IIII0" of the separating area 202 or 202b.

When the 6-bit information "0IIIII0" of the first separating area 202 is stored in the shift register 40I, the coincidence circuit 402 releases the reference line detection signal 3I9, whereby the 5/4 conversion circuit 320 initiates conversion. Thus the NRZ signal 3I5, corresponding to the information of the read information track 2I, is subjected to 5/4-conversion and the regenerated signal is released.

Then, when the information "0IIII0" of the next separating area 202b is stored in the shift register 40I, the coincidence circuit 402 releases the reference line detection signal 3I9 whereby the 5/4-conversion circuit 320 terminates the release of the regenerated signal.

In this manner the regeneration of information from the information track 2I is conducted by self clocking. Subsequently a desired information track is selected for reading by the movement of the optical card in the direction A and/or that of the optical head II, provided with the sensor array I0, in the direction C, and the information of said track is regenerated.

However, since the movement of the sensor array I0 is not synchronized with the movement of the optical card relative to the sensor array I0, an information track may be scanned plural times depending on the scanning speed of the sensor array I0 in the direction B and the moving speed of the optical card in the direction A. For example, in case the sensor array I0 with 5I2 cells is driven with the clock signal of a frequency $F = I0$ MHz, while an optical card with a bit size $L = I0$ $\mu$m is moved with a speed $V = 40$ mm/sec, each information track is scanned by:

$$S = L/V \times I/(I/F \times 5I2) = 4.88 \text{ times.}$$

It therefore becomes necessary to detect that the optical card has moved to a succeeding information track, and this detection is achieved in the following manner. The coincidence circuit 403 releases a coincidence signal 324 upon detection of the content "000000" of the separating area 202 or 202b, and the transfer to a new track can be identified by the reception of the reference line detection signal 3I9, after the detection of said coincidence signal 324.

Now reference is made to Fig. II for explaining a method of properly imaging the information track on the linear sensor array I0.

It is assumed that an area Sa of the optical card is imaged on the sensor array at first. In this state the sensor array only releases a front end signal 322 as shown in the right-hand side of the drawing. Then, when an area Sb is imaged on the sensor array by the movement of the optical card in the direction A, the reference line detection signal 3I9 appears in the output of the sensor array as illustrated. Thus the reference line position detecting circuit 32I counts the number of driving clock pulses between the front end signal 322 and said detection signal 3I9 to know the relative imaging position of the information track with respect to the sensor array, in the form of the reference line position signal 323. In response to said signal 323, the optical head is controlled in the direction C in such a manner that the area of the card imaged on the sensor array is changed from Sc to Sd by the movement of the card in the direction A. In this manner the optical head can be brought to an appropriate position before the information track

area 201 is imaged on the sensor array, so that the information reading as explained in relation to Fig. 9 is initiated immediately when the information track area 201 is iamged on the sensor array.

In the regenerating process for the optical card as explained above, the length of the head introduction area 205 of the separating area 202 can be reduced if the moving speed of the optical card in the direction A is made smaller in the position control of the optical head in response to the reference line position signal 323. Since the card is usually reciprocated in the direction A, the moving speed may be eventually low at said head positioning, due to the start-up characteristic of the driving motor. However, if the positioning cannot be achieved during such lower moving speed, it is desirable to positively reduce the card speed for head positioning. In this manner it is made possible to minimize the loss in recording capacity, or the decrease in the area of the information track area 201, resulting from the presence of the head introduction area 205. Such lower moving speed of the optical card at the head position control can be achieved utilizing the deceleration and acceleration periods in the vicinity of inversion of the card reciprocation. As explained above, the card is usually reciprocated in the direction A and may have a lower moving speed at said head position control due to the start-up characteristic of the driving motor, and the period of such lower moving speed can be utilized for this purpose. If the head positioning cannot be achieved during said lower speed, it is desirable to positive lower the moving speed for achieving the head position control. Naturally in the information reading from the information track, the moving speed of the optical card in the direction A can be increased to elevate the regenerating speed.

As explained in the foregoing, an accurate high-speed access of the regenerating head, such as the optical head, to a desired information track or band, by extending the reference line, present in the recording format of the information recording medium, in the direction of arrangement of plural information tracks (direction A in Fig. 4) and utilizing said extended part of the reference line as a head introduction (positioning) pattern.

In the recording format shown in Fig. 4, the extended portion 205, or the head introduction pattern, has a format similar to that of the reference line in a portion adjacent to the information track area 201. However the recording format of said extended portion 205 may be different from that of the reference line. The formatmentioned above indicates the width (direction A) and length (direction C) of the bit pattern, number of bits in said bit pattern (length of said portion in the direction C), and/or the recording method.

For example, the reference line in the format shown in Fig. 4 has information "0IIII0" as explained before, but the extended portion of the reference line may contain different information such as "00II00" or "II".

In the information recording medium shown in Fig. 4 the head introduction pattern is composed of an extended portion of the reference line, but it is not limited to such structure.

As an example, in Fig. 4, it is also possible to form a particular pattern extended in the direction A adjacent to the information track area 201 and to perform the head positioning, utilizing said particular pattern as the head introduction pattern. Also in this case the head positioning is achieved in such a manner that said particular pattern falls on a predetermined position or in a predetermined range of the sensor array. However the structure of the foregoing embodiment is advantageous since an introduction pattern composed of the extention of the reference line allows to simplify the control circuit of the regenerating apparatus as shown in Fig. 7.

Fig. 12 is a partial enlarged schematic view of another embodiment of the recording format of the information recording medium of the present invention, showing a part similar to that shown in Fig. 4.

201 indicates an information track area, in which a line of information bits in the direction C constitutes an information track. A unit data area 204 of the information track consists of 5 bits, and each information track is composed of a group of such unit data areas. A separating area or reference line 202 in the present embodiment is formed adjacent, in the direction C, to the information track area 201 and is externally extended as a portion 205 in the direction A, in a similar manner as in Fig. 4. Said reference line 202 and the information track area 201 constitute a band 203.

Each unit data area 204 of the information track consists of 5 bits, and the data recorded therein are subjected to a 4/5 conversion as shown in the foregoing table, followed by a NRZI modulation.

In the 4/5 NRZI modulation of the present embodiment, as shown in Fig. 5, hexadecimal data E0 are subjected to a 4/5-conversion and then to a NRZI modulation, and the resulting signals only have lengths of T, 2T and 3T, wherein T is the minimum inversion interval of the signal, corresponding to I bit in Fig. 12. Thus the information recorded in the information track area 201 do not contain an inversion interval of 4T or longer.

Therefore, in the present embodiment, an area of an inversion interval of 4T is utilized as the separating area, or reference line 202, for separating and identifying the information tracks. As shown in Fig. 4, the portion of the reference line 202 adjacent to the information track area 201 has a

length of 6 bits in the direction C, of which two end bits are "0" while central 4 bits are "I" of a strip shape with a narrower width (for example about I/2) than a bit length in the direction A. In this manner an area of separating signals "0IIII0" with an inversion interval of 4T is formed in the direction C. Naturally the separating signal is not limited to such form but can be of any form identifiable upon signal reading.

The information track has a capacity of 80 bits consisting of I6 unit data areas, but is not provided with a preamble area for self-clocking at the regeneration.

The detection of the reference can be securely achieved since the separating area 202 contains consecutive same signals which do not appear in the information track as explained above. Also the storage of a larger amount of information is made possible due to the absence of the preamble area for obtaining information regenerating clock signals and also due to the reduced number of bits other than data.

Also in the present embodiment, wherein the central 4 bits "I" of the reference line 202, adjacent to the information track area 20I, have a width narrower than a bit length in the direction A, the entire sensor array I0 securely faces a same information track as long as the separating signal "0IIII0" of the reference line 202 can be perfectly read on said sensor array I0, even if the information track is not parallel to the reading area of the sensor array I0 as shown in Fig. 6.

In the present embodiment, the portion 205 externally extended from the reference line 202 adjacent to the information track area 20I functions as an optical head introduction area for controlling the position of the optical head II in the direction C. The reference line 202 in said head introduction area is difference from the reference line in a portion adjacent to the information track area. More specifically, two end bits in the direction C are "0", and the central 4 bits are "I" with a width, in the direction A, same as that of one bit of the information track area 20I. In this manner the pattern is made continuous in the direction A because track separation is unnecessary in said area 205, and such structure allows immediate detection of the separating signal "0IIII0" and rapid control of the optical head.

In the following there will be explained an embodiment of the process for regenerating information from the above-explained information recording medium. There is employed an optical card as the information recording medium of the recording format shown in Fig. I2, and also employed is the apparatus shown in Fig. 2 for information regeneration from said optical card. Also there is employed an optical magnification that, as shown in Fig. 7, a bit 206 in the recording area of the optical card corresponds to four cells 207 of the one-dimensional sensor array I0. As an example, in case each bit 206 of the optical card has a dimension of I0 $\mu$m and a cell 207 of the sensor array I0 has a dimension of I5 $\mu$m, the magnification of the imaging optical system 9 should be 4 x I5/I0 = 6 times.

Now reference is made again to Fig. 8 for explaining the process of information regeneration in the present embodiment.

The recording area of the optical card is provided with a band 203, neighboring bands 203a, 203b, information tracks 2I, 2Ia, 2Ib of said bands, and separating areas 202, 202a, 202b for separating said information tracks, according to the format shown in Fig. I2. Each track of a band is composed of a separating area of 6 bits and an information track of 80 bits, or a total of 86 bits, and is therefore projected onto 344 cells of the sensor array I0.

There is employed a one-dimensional sensor array I0 having 5I2 cells 207, and a reading area 208 is defined thereon in such a manner that parts of neighboring information tracks 2Ia, 2Ib are also focused on said sensor array.

The definition of the reading area 208 in such manner allows to obtain a clock signal at the regeneration of information, without a preamble area in the track 2I for obtaining self clock signal. More specifically, when the sensor array I0 performs a scanning operation in the direction B in the reading area 208, regenerating clock pulses are obtained from the information of a part of the track 2Ia, and the information recorded in the track 2I is regenerated by thus obtained clock signal from the point of detection of the separating area 202, and the regeneration is terminated upon detection of the separating area 202b.

Also the relative position of the reading area 208 and the information track 2I can be known from the signal of the separating area 202 obtained from the sensor array.

For regenerating information from the optical card of the present embodiment, there can be employed an apparatus shown by a block diagram of Fig. 9.

Referring to Fig. 9, the sensor array I0 having the reading area 208 is driven by a driving clock signal 307 from a sensor array driver 306, and the output signal 308 of the sensor array is amplified by said driver 306, and supplied, as a video signal 309, to a binalizing circuit 3I0. A NRZI signal 3II obtained therefrom is supplied to a clock reproducing circuit 3I2, a NRZI demodulating circuit 3I4 and a reference line detecting circuit 3I6.

The clock reproducing circuit 3I2 extracts a clock signal 3I3 from the NRZI signal 3II and supplies said clock signal to the NRZI demodulating circuit 3I4, which receives said clock signal 3I3 and the NRZI signal 3II and supplies a demodulated NRZ signal 3I5 to a 5/4-conversion circuit 320. The reference line detecting circuit 3I6 receives a clock signal 3I8 obtained by frequency division of the driving clock signal 307 in a 1/4 frequency dividing circuit 3I7 and the NRZI signal 3II from the binarizing circuit 3I0, and supplies a reference line detection signal 3I9 to the 5/4-conversion circuit 320, which effects a 5/4 conversion on the NRZ signal 3I5 in response to said detection signal 3I9.

A reference line position detecting circuit 32I releases a reference line position signal 323 by counting the number of driving clock pulses 307 from the entry of a reading front end signal 322 from the sensor array driver 306 to the entry of the reference line detection signal 3I9.

Fig. I0 is a block diagram of said reference line detecting circuit 3I6. A serial input terminal of a shift register 40I receives the NRZI signal 3II, while a clock input terminal thereof receives the 1/4-divided clock signal 3I8. Also the parallel output terminals of 6 bits of the shift register 40I are respectively connected to the input terminals of a "0IIII0" coincidence circuit 402, of which coincidence signal is supplied, as the reference line detection signal 3I9, to the 5/4-conversion circuit 320. Said parallel output terminals are also respectively connected to the input terminals of a "000000" coincidence circuit 403 releasing a coincidence signal 324.

Now there will be explained the function of the above-explained regenerating apparatus, while making reference to Figs. I2 and 9.

At first, when the sensor array I0 scans the reading area 208 in the direction B in response to the driving clock signal 307, a signal representing a part of the information of the track 2Ia appears in the NRZI signal 3II. Since said signal contains inversion intervals of T, 2T and 3T only as explained before, the clock signal 3I3 can be reproduced by detecting the minimum inversion interval T by means of the clock reproducing circuit 3I2, composed for example of a PLL circuit. Said clock signal 3I3 is utilized for demodulating the NRZI signal 3II into the NRZ signal 3I5 in the demodulating circuit 3I4. However the 5/4-conversion circuit 320 does not function until the entry of the first reference line detection signal 3I9. The shift register 40I of the reference line detecting circuit 3I6 receives bit signals of the reading area 208 in succession and is always filled with signals of 6 bits. Consequently the reference line detection signal 3I9 is not released unless the content of said shift register 40I coincides with the content "0IIII0" of the separating area 202 or 202b.

When the 6-bit information "0IIII0" of the first separating area 202 is stored in the shift register 40I, the coincidence circuit 402 releases the reference line detection signal 3I9, whereby the 5/4-conversion circuit 320 initiates conversion. Thus the NRZ signal 3I5, corresponding to the information of the read information track 2I, is subjected to a 5/4-conversion and the regenerated signal is released.

Then, when the information "0IIII0" of the next separating area 202b is stored in the shift register 40I, the coincidence circuit 402 releases the reference line detection signal 3I9 whereby the 5/4-conversion circuit 320 terminates the release of the regenerated signal.

In this manner the regeneration of information from the information track 2I is conducted by self clocking. Subsequently a desired information track is selected for reading by the movement of the optical card in the direction A and/or that of the optical head II, carrying the sensor array I0, in the direction C, and the information of said track is regenerated.

However, since the movement of the sensor array I0 is not synchronized with the movement of the optical card relative to the sensor array I0, an information track may be scanned plural times depending on the scanning speed of the sensor array I0 in the direction B and the moving speed of the optical card in the direction A. For example, in case the sensor array I0 with 5I2 cells is driven with the clock signal of a frequency $F = I0$ MHz, while an optical card with a bit size $L = I0$ $\mu$m is moved with a speed $V = 40$ mm/sec, each information track is scanned by:

$$S = L/V \times 1/(1/F \times 5I2) = 4.88 \text{ times.}$$

It therefore becomes necessary to detect that the optical card has moved to a succeeding information track, and this detection is achieved in the following manner. The coincidence circuit 403 releases a coincidence signal 324 upon detection of the content "000000" of the separating area 202 or 202b, and the transfer to a new track can be identified by the reception of the reference line detection signal 3I9, after the detection of said coincidence signal 324.

Now reference is made to Fig. II for explaining a method of properly imaging the information track on the linear sensor array I0.

It is assumed that an area Sa of the optical card is imaged on the sensor array at first. In this state the sensor array only releases a front end signal 322 as shown in the right-hand side of the drawing. Then, when an area Sb is imaged on the sensor array by the movement of the optical card in the direction A, the reference line detection signal 319 appears in the output of the sensor array as illustrated. Thus the reference line position detecting circuit 321 counts the number of driving clock pulses between the front end signal 322 and said detection signal 319 to know the relative imaging position of the information track with respect to the sensor array, in the form of the reference line position signal 323. In response to said signal 323, the optical head is controlled in the direction C in such a manner that the area of the card imaged on the sensor array is changed from Sc to Sd by the movement of the card in the direction A. In this manner the optical head can be brought to an appropriate position before the information track area 201 is imaged on the sensor array, so that the information reading as explained in relation to Fig. 9 is initiated immediately when the information track area 201 is imaged on the sensor array.

In the regenerating process for the optical card as explained above, the length of the head introduction area 205 of the separating area 202 can be reduced if the moving speed of the optical card in the direction A is made smaller during the position control of the optical head in response to the reference line position signal 323. In this manner it is made possible to minimize the loss in the recording capacity, or the decrease in the area of the information track area 201, resulting from the presence of the head introduction area 205. Such lower moving speed of the optical card during the head position control can be achieved utilizing the deceleration and acceleration periods in the vicinity of inversion of the reciprocating motion of the card, as explained before. Naturally during the information reading from the information track, the moving speed of the optical card in the direction A can be increased to elevate the regenerating speed.

Fig. 13A is a partial enlarged schematic view of still another embodiment of the recording format of the information recording medium of the present invention.

201 indicates an information track area, in which a line of information bits in the direction C constitutes an information track. A unit data area 204 of the information track consists of 5 bits, and each information track is composed of a group of such unit data areas. Separating areas or reference lines 202 in the present embodiment are formed adjacent, in the direction C, to the information track areas 201 and are externally extended as portions 205 in the direction A, in a similar manner as in Fig. 4. As illustrated, the neighboring extended portions 205 are formed in mutually opposite directions. More specifically, the reference line 202 at left has an extended portion 205 thereabove, while the reference line 202 at the center has an extended portion 205 therebelow, and the reference line 202 at right has an extended portion 205 again thereabove. Said reference line 202 and the information track area 201 constitute a band 203.

Each unit data area 204 of the information track consists of 5 bits, and the data recorded therein are subjected to a 4/5 conversion as shown in the foregoing table, followed by a NRZI modulation.

In the 4/5 NRZI modulation of the present embodiment, as shown in Fig. 5, hexadecimal data E0 are subjected to a 4/5-conversion and then to a NRZI modulation, and the resulting signals only have lengths of T, 2T and 3T, wherein T is the minimum inversion interval of the signal, corresponding to 1 bit in Fig. 13A. Thus the information recorded in the information track area 201 do not contain an inversion interval of 4T or longer.

Therefore, in the present embodiment, an area of an inversion interval of 4T is utilized as the separating area, or reference line 202, for separating and identifying the information tracks. In the same manner as shown in Fig. 4, the portion of the reference line 202 adjacent to the information track area 201 has a length of 6 bits in the direction C, of which two end bits are "0" while central 4 bits are "1" of a strip shape with a narrower width (for example about 1/2) than a bit length in the direction A. In this manner an area of separating signals "011110" with an inversion interval of 4T is formed in the direction C. Naturally the separating signal is not limited to such form but can be of nay form identifiable upon signal reading.

The information track has a capacity of 80 bits consisting of 16 unit data areas, but is not provided with a preamble area for self-clocking at the regeneration.

The detection of the reference line can securely achieved since the separating area 202 contains consecutive same signals which do not appear in the information track as explained above. Also the storage of a larger amount of information is made possible due to the absence of the preamble area for obtaining information regenerating clock signal and also due to the reduced number of bits other than data.

Also in the present embodiment, wherein the central 4 bits "1" of the reference line 202, adjacent to the information track area 201, have a width narrower than a bit length in the direction A, the entire sensor array 10 securely faces a same information track as long as the separating signal "011110" of the reference line 202 can be perfectly read on said sensor array 10, even if the information track is not parallel to the reading area of the sensor array 10 as shown in Fig. 6.

In the present embodiment, the portion 205 externally extended from the reference line 202 adjacent to the information track area 201 functions as an optical head introduction area for controlling the position of the optical head II in the direction C.

In the following there will be explained an embodiment of the process for regenerating information from the above-explained information recording medium. There is employed an optical card as the recording medium of the format shown in Fig. I3A, and also employed is the apparatus in Fig. 2 for information regeneration from said optical card. Also there is employed an optical magnification that, as shown in Fig. 7, a bit 206 in the recording area of the optical card corresponds to four cells 207 of the one-dimensional sensor array I0. As an example, in case each bit 206 of the optical card has a dimension of I0 $\mu$m and a cell 207 of the sensor array I0 has a dimension of I5 $\mu$m, the magnetification of the imaging optical system 9 should be $4 \times I5/I0 = 6$ times.

Now reference is made to Fig. 5 for explaining the process of information regeneration in the present embodiment.

The recording area of the optical card is provided with a band 203, neighboring bands 203a, 203b, information tracks 2I, 2Ia, 2Ib of said bands, and separating areas 202, 202a, 202b for separating said information tracks, according to the format shown in Fig. I3A. Each track of a band is composed of a separating area of 6 bits and an information track of 80 bits, or a total of 86 bits, and is therefore projected onto 344 cells 207 of the sensor array I0.

There is employed a cone-dimensional sensor array I0 having 5I2 cells 207, and a reading area 208 is defined thereon in such a manner that parts of neighboring information tracks 2Ia, 2Ib are also focused on said sensor array.

The definition of the reading area 208 in such manner allows to obtain a clock signal at the regeneration of information, without a preamble area in the track 2I for obtaining self clock signal. More specifically, when the sensor array I0 performs a scanning operation in the direction B in the reading area 208, regenerating clock pulses are obtained from the information of a part of the track 2Ia, and the information recorded in the track 2I is regenerated by thus obtained clock signal from the point of detection of the separating area 202, and the regeneration is terminated upon detection of the separating area 202b.

Also the relative position of the reading area 208 and the information track 2I can be known from the signal of the separating area 202 obtained from the sensor array.

For regenerating information from the optical card of the present embodiment, there can also be employed the apparatus shown by the block diagram of Fig. 9.

Referring to Fig.9, the sensor array I0 having the reading area 208 is driven by a driving clock signal 307 from a sensor array driver 306, and the output signal 308 of the sensor array is amplified by said driver 306, and supplied, as a video signal 309, to a binalizing circuit 3I0. A NRZI signal 3II obtained therefrom is supplied to a clock reproducing circuit 3I2, a NRZI demodulating circuit 3I4 and a reference line detecting circuit 3I6.

The clock reproducing circuit 3I2 extracts a clock signal 3I3 from the NRZI signal 3II and supplies said clock signal to the NRZI demodulating circuit 3I4, which receives said clock signal 3I3 and the NRZI signal 3II and supplies a demodulated NRZ signal 3I5 to a 5/4-conversion circuit 320. The reference line detecting circuit 3I6 receives a clock signal 3I8 obtained by frequency division of the driving clock signal 307 in a I/4 frequency dividing circuit 3I7 and the NRZI signal 3II from the binarizing circuit 3I0, and supplies a reference line detection signal 3I9 to the 5/4-conversion circuit 320, which effects a 5/4-conversion on the NRZ signal 3I5 in response to said detection signal 3I9.

A reference line position detecting circuit 32I releases a reference line position signal 323 by counting the number of driving clock pulses 307 from the entry of a reading front end signal 322 from the sensor array driver 306 to the entry of the reference line detection signal 3I9.

Said reference line detecting circuit 3I5 has a structure as shown by the block diagram of Fig. I0. A serial input terminal of a shift register 40I receives the NRZI signal 3II, while a clock input terminal thereof receives the I/4-divided clock signal 3I8. Also the parallel output terminals of 6 bits of the shift register 40I are respectively connected to the input terminals of a "0IIII0" coincidence circuit 402, of which coincidence signal is supplied, as the reference line detection signal 3I9, to the 5/4-conversion circuit 320. Said parallel output terminals are also respectively connected to the input terminals of a "000000" coincidence circuit 403 releasing a coincidence signal 324.

Now there will be explained the function of the above-explained regenerating apparatus, while making reference to Figs. I3A and 8.

At first, when the sensor array I0 scans the reading area 208 in the direction B in response to the driving clock signal 307, a signal representing a part of the information of the track 2Ia appears in the NRZI signal 3II. Since said signal contains inversion intervals of T, 2T and 3T only as explained before, the clock signal 3I3 can be reproduced by detecting the minimum inversion interval T by means of the clock reproducing circuit 312, composed for example of a PLL circuit. Said clock signal 313 is utilized for demodulating the NRZI signal 311 into the NRZ signal 315 in the demodulating circuit 314. However the 5/4-conversion circuit 320 does not function until the entry of the first reference line detection signal 319. The shift register 401 of the reference line detecting circuit 316 receives bit signals of the reading area 208 in succession and is always filled with signals of 6 bits. Consequently the reference line detection signal 319 is not released unless the content of said shift register 401 coincides with the content "011110" of the separating area 202 or 202b.

When the 6-bit information "011110" of the first separating area 202 is stored in the shift register 401, the coincidence circuit 402 releases the reference line detection signal 319, whereby the 5/4-conversion circuit 320 initiates conversion. Thus the NRZ signal 315, corresponding to the information of the read information track 21, is subjected to a 5/4-conversion and the regenerated signal is released.

Then, when the information "011110" of the next separating area 202b is stored in the shift register 401, the coincidence circuit 402 releases the reference line detection signal 319 whereby the 5/4-conversion circuit 320 terminates the release of the regenerated signal.

In this manner the regeneration of information from the information track 21 is conducted by self clocking. Subsequently a desired information track is selected for reading by the movement of the optical card in the direction A and/or that of the optical head 11, carrying the sensor array 10, in the direction C, and the information of said track is regenerated. However, since the movement of the sensor array 10 is not synchronized with the movement of the optical card relative to the sensor array 10, an information track may be scanned plural times depending on the scanning speed of the sensor array 10 in the direction B and the moving speed of the optical card in the direction A. For example, in case the sensor array 10 with 512 cells is driven with the clock signal of a frequency $F = 10$ MHz, while an optical card with a bit size $L = 10$ $\mu$m is moved with a speed $V = 40$ mm/sec, each information track is scanned by:
$$S = L/V \times 1/(1/F \times 512) = 4.88 \text{ times.}$$
It therefore becomes necessary to detect that the optical card has moved to a succeeding information track, and this detection is achieved in the following manner. The coincidence circuit 403 releases a coincidence signal 324 upon detection of the content "000000" of the separating area 202 or 202b, and the transfer to a new track can be identified by the reception of the reference line detection signal 319, after the detection of said coincidence signal 324.

Now reference is made to Fig. 14A for explaining a method of properly imaging the information track on the linear sensor array 10.

In Fig. 14A the optical card is reciprocated in the direction A, and the information reading is conducted during the card movement in both directions, i.e. upwards and downwards in Fig. 14A.

It is assumed that an area Sa of the optical card is at first imaged on the sensor array. In this state the sensor array only releases a front end signal 322 as shown in the right-hand side of the drawing. Then, when an area Sb is imaged on the sensor array by the movement of the optical card in the direction A, the reference line detection signal 319 appears in the output of the sensor array as illustrated. Thus the reference line position detecting circuit 321 counts the number of driving clock pulses between the front end signal 322 and said detection signal 319 to know the relative imaging position of the information track with respect to the sensor array, in the form of the reference line position signal 323. In response to said signal 323, the optical head is controlled in the direction C in such a manner that the area of the card imaged on the sensor array is changed from Sc to Sd by the movement of the card in the direction A. In this manner the optical head can be brought to an appropriate position before the information track area 201 is imaged on the sensor array, so that the information reading as explained in relation to Fig. 9 is initiated immediately when the information track area 201 is imaged on the sensor array.

Upon completion of information reading on a band 203, the optical card is reversed in the direction A while the optical head is moved in the direction C to effect a similar information reading on a next band during the inverse movement of said optical card. Fig. 14B schematically illustrates such information reading method. In Fig. 14B, the trajectory of the optical head with respect to the bands is schematically shown by an arrow. At first the optical head approaches a left-end band 203 from above, then is subjected to a positioning in the direction C by the head introduction area 205 extended upwards from the reference line 202, and descends downwards, reading the information of the information track area 201. Then the head is reversed and moved to right in the direction C to approach a second band 203 from left from below, is subjected to a positioning in the direction C by the head introduction area 205 extended downwards from the reference line 202 and moves upwards, reading the information of the information track area 201. It is then inverted again and moved to right to effect a reading movement for a third band 203 from left in a similar manner as for the left-end band, and similar procedures are repeated thereafter.

In the regenerating process for the optical card as explained above, the length of the head introduction area 205 of the separating area 202 can be reduced if the moving speed of the optical card in the direction A is made smaller during the position control of the optical head in response to the reference line position signal 323. In this manner it is made possible to minimize the loss in the recording capacity, or the decrease in the area of the information track area 201, resulting from the presence of the head introduction area 205. Such lower moving speed of the optical card during the head position control can be achieved, for example, utilizing the deceleration and acceleration periods in the vicinity of inversion of the reciprocating motion of the card. Naturally during the information reading from the information track, the moving speed of the optical card in the direction A can be increased to elevate the regenerating speed.

Fig. I3B is a partial enlarged schematic view of a variation of the format in the foregoing embodiment, showing a similar part as in Fig. I3A.

In this variation, each reference line 202 not only has a head introduction area 205 extended in one direction as shown in Fig. I4A but also has another extended area 206 in the opposite direction. Consequently each reference line 202 has extended portions in both directions A, namely above and below. Besides information tracks are formed in an area to the left of each extended portion 205 and to the right of each extended portion 206 of two neighboring reference lines 202. Thus, in any two neighboring bands, one has a blank area thereabove between the extended portions while the other has a blank are therebelow between the extended portions.

In the present case the information can be regenerated in the same manner as in the case of Fig. I3A.

The present variation has an advantage of an increased memory capacity, since each band has additional information tracks, corresponding to the extended portion, in the downstream side of the relative motion of the optical head.

The foregoing embodiments enable accurate and rapid control of the reading head in the access to a desired track or band, and also enable information reading in both directions in reciprocating motion with respect to the reading head, thereby achieving rapid and accurate regeneration of the recorded information without reading errors.

Though the foregoing embodiments employ 4/5 NRZI modulation, other modulations capable of self clocking with an area for obtaining the regenerating clock signals, such as MFM or EFM modulations, are also applicable in these embodiments. It is also possible to provide, in the band, a preamble area for obtaining a regenerating clock signal.

A neighboring area utilized for obtaining the regenerating clock signal may occupy said neighboring information track or plural bands.

Furthermore, the present invention is applicable to other recording media, such as a magnetic recording medium or magnetooptical recording medium utilizing the inversion of direction of magnetization, or a recording medium utilizing surface pits.

Consequently the information regenerating apparatus utilizing the recording medium and the process of the present invention is not limited to that shown in Fig. 2, but can be modified in various manners with various regenerating heads and with various driving mechanisms for the recording medium.

Also the recording formats of the information recording medium disclosed herein are non-limitative examples, and can be modified according to the method of regeneration and the structure of apparatus, and it should be understood that the concept of the present invention is basically applicable regardless of the format.

As explained in the foregoing, the present invention allows, through the use of an information recording medium provided with a pattern for introducing the regenerating head, accurate and rapid control of the head in the access to a desired track or band, thereby enabling rapid and accurate regeneration of the recorded information without errors in information reading.

Furthermore, an exact head positioning is made possible since the relative head speed in the direction of arrangement of the information tracks is relatively low during the head positioning in the direction of array of information in the information track, but the relative head speed in the direction of arrangement of information tracks is increased in the information reading to enable rapid and accurate regeneration of recorded information without errors in reading. Furthermore it is made possible to reduce the head introduction area required on the information recording medium, and thus to reduce the loss in the memory capacity of said medium.

## Claims

1. An information recording medium comprising: plural information tracks arranged in a direction substantially perpendicular to the direction of array of information of each information track; and a reproducing head positioning pattern, formed along the direction of arrangement of said plural information tracks.

2. An information reproducing process comprising the steps of: positioning an information reproducing head by a relative movement of a reproducing head positioning pattern formed on an information recording medium and said reproducing head; and reproducing information of plural information tracks by a movement of said reproducing head relative to said plural information tracks arranged in a direction substantially perpendicular to the direction of array of information of said information track.

3. An information recording medium according to Claim I, wherein said plural information tracks are arranged also in the direction of array of information of said information track.

4. An information recording medium according to Claim 3, further comprising a separating area for separating and identifying each information track from another information track neighboring in the direction of array of information thereof.

5. An information recording medium according to Claim I, wherein said reproducing head positioning pattern is composed of a uniform pattern continuous in the direction of arrangement of said plural information tracks.

6. An information recording medium according to Claim I, comprising a plurality of said reproducing head positioning patterns.

7. An information reproducing process comprising the steps of: positioning an information reproducing head by a relative movement of a reproducing head positioning pattern formed on an information recording medium and an information reproducing head; reproducing information from plural information tracks by a movement of said reproducing head, relative to said plural information tracks arranged in a direction substantially perpendicular to the direction of array of information of said information track, in said direction of arrangement; and wherein the relative speed in said direction of arrangement in said positioning step is so controlled as not to exceed the relative speed in said direction of arrangement in said reproducing step.

8. An information reproducing process comprising the steps of: directing an information reproducing head to a reproducing head positioning pattern formed on an information recording medium; causing a relative movement of said head positioning pattern and said reproducing head; detecting the position of said head positioning pattern on a sensor of said reproducing head; positioning said reproducing head in response to a signal obtained in said detecting step; and reproducing information of plural information tracks by a relative movement of said reproducing head in the direction of arrangement of said plural information tracks.

9. An information recording medium comprising: plural information tracks arranged in a direction of array of information of said information track and also in a direction substantially perpendicular to said direction of array of information; a separating area provided for separating and identifying each of said plural information tracks from another information track neighboring in said direction of array of information; and a reproducing head positioning pattern composed of an external extention, at least in a direction, of said separating area, beyond the neighboring information tracks.

10. An information recording medium according to Claim 9, wherein said reproducing head positioning pattern is composed of a uniformly continuous pattern in the direction of extention of said separating area.

11. An information recording medium according to Claim 9, wherein said separating areas are alternately extended in the opposite directions, with respect to a direction substantially perpendicular to the direction of array of information of the information tracks.

12. An information recording medium according to Claim 10, wherein said separating areas are extended in mutually opposite directions substantially perpendicular to the direction of array of information of the information tracks, and additional information tracks are provided in the areas defined between the neighboring extended portions in each of said directions in such a manner that said areas in both directions are filled with said information tracks in crisscross manner.

13. A memory card comprising: plural information tracks arranged in the longitudinal and transversal directions; and plural reproducing head positioning patterns, formed along the longitudinal direction of said card and provided in the vicinity of the first ones of said plural information tracks.

14. A memory card according to Claim 13, further comprising a separating area for separating and identifying each of said plural information tracks from another information track neighboring in the transversal direction of said card.

15. A memory card according to Claim 14, wherein said reproducing head positioning pattern is formed adjacent to or in the vicinity of said separating area in the longitudinal direction of said card.

16. A memory card comprising:

an area comprising plural information tracks arranged two-dimensionally in said area; and

an information reproducing head introduction area formed close to or adjacent to the first-mentioned area, whereby an information reproducing head performs a relative movement to said introduction area and then a relative movement to said first-mentioned area to regenerate the information stored in said plural information tracks.

17. An information reproducing apparatus comprising:

means for converting codes recorded on an information recording medium into electrical signals;

means for selecting, from said signals, codes for positioning a reproducing head formed on said information recording medium;

means for detecting the relative position of said reproducing head and said positioning codes, in response to a signal from said selecting means; and

means for reproducing codes corresponding to the recorded information in the signals obtained from said converting means, after the positioning of said reproducing head in response to a signal from said detecting means.

## FIG. 1 PRIOR ART

C

2
3

3
1

4    5

A

## FIG. 2 PRIOR ART

10
7
9
8
11

C

A

1

6

## FIG. 3

C

201

202    204    202    201

A

203    203

## FIG. 4

## FIG. 5

```
                                      EO
                                      ⇩
BINARY DATA              1 1 1 0  0 0 0 0
                                  ⇩
AFTER 4/5 CONVERSION   0 1 1 1 0  1 1 0 0 1
                                  ⇩
AFTER NRZI MODULATION {
```

T | 2T | 3T

## FIG. 6

## FIG. 7

## FIG. 8

## FIG. 9

SENSOR ARRAY (10) → SENSOR ARRAY DRIVER (306) → BINARIZATION CKT → CLOCK REPRODUCING CKT (312) → NRZI DEMODULATION CKT (314) → 5/4 CONVERSION CKT (320) → INFORMATION REPRODUCING SIGNAL OUTPUT

308, 307, 309, 310, 311, 313, 315

1/4 DIVIDING CKT (317)

REFERENCE LINE DETECTING CKT (316)

REFERENCE LINE POSITION DETECTING CKT (321) → REFERENCE LINE POSITION SIGNAL OUTPUT (323)

322, 318, 319

## FIG. 10

311 → SHR (401) → COINCIDENCE CKT (402) → 319

318 → SHR → COINCIDENCE CKT (403) → 324

0 227 380

## FIG. 11

C

Sa

Sb

Sc

Sd

205

A

322

0

322      319

0

319

0

322      319

0

202        202        202

201        201

203        203        203

## FIG. 12

C

201        201

202        202

205

204

A

203        203

FIG. 13A

# FIG. 13B

0 227 380

## FIG. 14A

## FIG. 14B

## DOCUMENTS CONSIDERED TO BE RELEVANT

EP 86309623.6

| Category | Citation of document with indication, where appropriate, of relevant passages | Relevant to claim | CLASSIFICATION OF THE APPLICATION (Int. Cl.4) |
|---|---|---|---|
| X | EP - A1 - 0 146 257 (STORAGE RE-SEARCH PTY.) <br> * Fig. 1A,1B; page 7, line 16 - page 11, line 30 * <br> -- | 1-6,13, 14,16, 17 | G 11 B 7/013 <br> G 11 B 7/00 <br> G 11 B 7/08 <br> G 11 B 20/20 |
| A | EP - A1 - 0 067 061 (HITACHI) <br> * Fig. 4; page 5, line 26 - page 6, line 20 * <br> -- | 1 | |
| A | DE - A1 - 3 039 902 (TOKYO SHIBAURA) <br> * Claim 1 * <br> ---- | 1 | |

TECHNICAL FIELDS
SEARCHED (Int. Cl.4)

G 11 B 7/00

G 11 B 5/00

G 03 F 3/00

G 11 B 20/00

G 11 B 27/00

G 03 B 21/00

The present search report has been drawn up for all claims

| Place of search | Date of completion of the search | Examiner |
|---|---|---|
| VIENNA | 06-03-1987 | BERGER |